# EUROPEAN PATENT APPLICATION

(11) **EP 4 663 697 A1**
(43) Date of publication of application: **17.12.2025**
(21) Application number: 24382632.8
(22) Date of filing: 12.06.2024
(51) Int. Cl.: C08L 3/02, C08L 67/02, F42B 5/30

(54) **INJECTION-MOLDABLE, SOIL BIODEGRADABLE THERMOPLASTIC COMPOSITION AND AMMUNITION FOR HUNTING AND SPORT SHOOTING MADE FROM IT**

(71) Applicant: Sociedad Anónima Minera Catalano Aragonesa, 50001 Zaragoza (ES)
(72) Inventor: ALFONSO ALEGRE, MARÍA JOSÉ, 50001 ZARAGOZA (ES); CABALLERO LÓPEZ, MIGUEL ÁNGEL, 50001 ZARAGOZA (ES); GÓMEZ DE SEGURA, JORGE ESPARZA, 50001 ZARAGOZA (ES); CATALÁN AGUIRRE, SILVIA, 50001 ZARAGOZA (ES); SEGURA GUAJARDO, SERGIO, 50001 ZARAGOZA (ES)
(74) Representative: Schäfer, Matthias W.

(57) **Abstract**

Injection-moldable and soil-biodegradable thermoplastic composition, suitable for use in ammunition, especially in wads and other components of cartridges for hunting and sport shooting, comprising one or more biodegradable polyesters, preferably PBAT (polybutylene adipate terephthalate) and/or PBTSeb (polybutylene terephthalate, with sebacic acid), with a high fluidity, *and in a percentage* ≥*51%, being able to be supplemented with plasticized starch. This composition achieves* biodegradation in soil of more than 90% in a time much less than two years, together with high impact resistance, lower moisture absorption (with the associated advantages of greater dimensional stability, lower production cost and better and safer ballistics), compatibility with existing injection and manufacturing processes and lower production cost thanks to its greater fluidity.

## Description

As its title indicates, the present specification refers to a thermoplastic composition that is injection-moldable and soil-biodegradable, suitable for use in ammunition, especially in wads and other components of cartridges for hunting and sport shooting, and to the ammunition for hunting and sport shooting manufactured with it in some of its parts, comprising one or more biodegradable polyesters, preferably PBAT (polybutylene adipate terephthalate) and/or PBTSeb (polybutylene terephthalate, with sebacic acid), with a high fluidity, and in a percentage ≥51%, being able to be supplemented with plasticized starch, the composition being biodegradable in soil.

### Field of the invention

The invention relates to the field of thermoplastic compositions that are injection-moldable and soil-biodegradable, in particular those used for the manufacture of parts of hunting and sport shooting cartridges, and more especially those used for the manufacture of wads for such cartridges.

### State of the current art

Within the sector of the manufacture of parts of hunting and sport shooting cartridges, and in general of many similar elements, there is a clear tendency to use compositions that manage to minimize their environmental damage after use, increasing their biodegradability, especially in the soil.

Thus, solutions are known such as the one described in patent US6565640B1 "*Compositions containing starch and*/*or modified starch and plasticisers*", which describes compositions that mainly use starch and modified starch, alone or optionally mixed with other polymers, in particular biopolymers. They are not specifically oriented towards hunting or sport shooting products, but mainly towards containers for food or beverages, pharmaceutical products, or temporary protective coatings for technical devices. Therefore, they do not aim to achieve specific properties, such as impact resistance, moisture resistance, or dimensional stability and reactions with shot pellets, which are typically achieved through a specific proportion of polyester to achieve that effect. For this reason, this type of compositions would not be especially suitable for the manufacture of wads for hunting or sport shooting. In addition, by using mainly starches, their main objective seems to be to achieve biodegradability in water, not posing special needs for biodegradability in soil.

Solutions are also known such as the one described in patent ES2540789 "*Biodegradable ammunition for firearms*", which describes a sheath, a bib shorts and/or a bullet, whose main material is composed of biodegradable polymers of plant origin, or biodegradable elastomeric polymers of plant origin, or biodegradable elastomeric polymers of petroleum origin, or biodegradable polymers of petroleum origin, or thermoplastics of petroleum origin with a catalyst, or by PVA polyvinyl alcohol, with a minimum of 50% of the mixtures, plus an inert and non-toxic mineral filler from the group of carbonates or mineral salts, in different mixtures and because the specific weight of the mixtures ranges from 0.6 g/cm³ to 6 g/cm³. It is more oriented to bullet ammunition, and although the ammunition is composed of an inert mineral filler plus one of the other options (biodegradable polymers of plant origin, or elastomeric or biodegradable polymers of plant origin, or biodegradable elastomeric polymers of petroleum origin, or biodegradable polymers of petroleum origin, or thermoplastics of petroleum origin with a catalyst, or by PVA polyvinyl alcohol), it does not contemplate at any time a mixture of plasticized starch and biodegradable polyesters as proposed in this invention, so it could not achieve the combination of technical effects of both components.

Mixtures are also known such as the one described in patent GB2507609A *"Biodegradable thermoplastic composite material*" which describes an extrudable and/or injection-moldable biodegradable thermoplastic composite material for use with artefacts such as mortars with a major percentage of natural starch polyester polymer; and a lower percentage of non-chemically treated powdered straw. Untreated straw is essential to provide uniform solidity to the composite material. The biodegradable thermoplastic composite material is ideal for disposable mortar practice projectiles and the sealing discs or wadding of shotgun cartridges, which avoids the need to recover them after firing.

It is a composition that claims to be compostable according to the EN13432 standard, but does not raise any evidence that it is biodegradable in soil according to the EN17033 standard. It also recognizes its frangibility, since it indicates that it retains its structural integrity up to a convenient maximum load and then tends to break into small fragments once that maximum load is exceeded, without deforming plastically. Its main application with these characteristics would be for mortars or for the application of cartridges where the biodegradable material is used in the sealing disc, in the cartridge models that use this element, but not for the manufacture of wads as is done in hunting or sport shooting cartridges, which is the main scope of this invention.

The functionality of a shutter disc is only to separate the gunpowder from the pellets while, in the case of the wad, its functionality is to separate the gunpowder from the pellets, and additionally to prevent the pellets from damaging the barrel of the weapon, improving ballistics and reducing the wear of the barrel of the weapon, especially its bore, also increasing the safety of its use. In addition, it would not be possible to manufacture in the current injection- molding equipment wads with the materials described in patent GB2507609A without modifications, and in the case of modifying the equipment to be able to inject them, the production process would be very expensive due to its difficulty and low productivity and would not be competitive with other products on the market, which makes it not an appropriate mixture for biodegradable wads.

Some wads are known that are specifically designed to achieve biodegradation in soil, as for example we find described in patent WO2024013775 "*Wad for cartridges with characteristics of biodegradability in soil*", which describes a wad for cartridges with characteristics of biodegradability in soil, produced with a mixture of biodegradable materials, said materials comprising poly(butylene succinate) (PBS) and poly(butylene terephthalate adipate) (PBAT), and may also comprise thermoplastic corn starch (TPS), previously obtained by extrusion of native corn starch with a plasticizer. Its states that its wads are biodegradable in soil according to the EN17556 standard, which includes biodegradability tests, as well as the standard part of the EN17033 standard, which is an advantage over being compostable, as in the previous case, since the used wads do not end up in a composting plant.

However, its biodegradability in soil is limited, and it is not proven that it can comply with the EN17033 standard, which is much more demanding in terms of biodegradability and damage to the natural environment, which requires technical characteristics and tests in addition to those for biodegradability established by EN17556. These additional laboratory tests serve to determine their chemical composition, in particular, for regulated metals and hazardous substances, their biodegradation in the soil, their ecotoxicity, that is, their toxic effects on plants, invertebrates and micro-organisms. One of the main criteria of the EN 17033 standard is the requirement to achieve a biodegradation rate of ≥90% under aerobic conditions for plastic, i.e. conversion of organic carbon into CO₂, in natural soil under temperature conditions of 20 to 28°C within a period of 2 years using a standardised test to measure CO₂ respiration.

In addition, comparative experimental tests carried out between the wad described in WO2024013775 and wads using the composition object of this report, show that the pressure obtained in the weapon is clearly higher in the wad described in WO2024013775 for speeds similar to the standard for polyethylene wads. This implies problems of greater internal wear of the weapon and greater risk of breakdowns or deformations that could affect the safety of the shooter, shortening the useful life of the weapon. These comparative experimental tests also demonstrate that the impact resistance of the wad described in WO2024013775 is lower than that of wads using the composition object of this report, being especially notable the difference at -10°C, which denotes a special fragility at low temperatures, which is a problem in hunting and sport shooting in winter and in geographical regions with low temperatures.

Solutions are also known such as the one described in patent EP4155659 "*Biodegradable shotshell components*" which describes devices and methods for pellet cartridges with biodegradable components in which one or more of the components of the housing may be formed of biodegradable materials. To do this, they use cellulosic fibres in a percentage ≥40% along with wax to provide gas sealing and obturation properties at high pressures with high reliability. They indicate that it is biodegradable but without specifying under what conditions. In addition, as in the previous case, the scope of application is different, since its main application would be for the sealing disc element, which, as we have already mentioned, has the functionality of separating the gunpowder from the pellets, but, however, in the case of a wad, its functionality is to separate the gunpowder from the pellets and prevent the pellets from damaging the barrel of the weapon, in addition to improving the ballistics. This could not be achieved with the mixture described due to its lack of structural strength.

In addition, as in the previous case, it would not be possible to manufacture wads with these materials in the current injection-molding equipment or, if they were modified to be able to inject them, the production process would be very expensive due to its difficulty and low productivity. Patent EP4155659 describes the manufacturing process necessary for these components, and it is a complex, expensive and unrealisable process with conventional equipment for thermoplastic injection, common in the sector.

It should also be noted that the use of waxes in the product compromises ballistics due to possible deposits in the barrel and due to its low thermal stability, which adversely affects the duration of the weapon and the safety of its use.

There are also solutions such as the one described in WO2014135289 "*Wad for cartridge*", which shows a wad for cartridge made of a water-soluble and compostable plastic material that, after being manufactured by injection, can be assembled, without any subsequent preparation, into a cartridge for use with better conditions than those of a polyethylene wad. Their main objective is to achieve optimal moisture content (2-10%) directly in the injection process. The material used is water-soluble, but it is not stated that it is water-biodegradable, which generates a high risk of product accumulation in water. It is compostable if collected, but the wads, once used, do not usually end up in composting facilities; instead, they are often discarded in nature, usually in the soil, and, as they are not biodegradable in soil, they cause a significant environmental impact.

In addition, the material described has a moisture content of 2-10% to have the appropriate technical properties for the application, as stated in the document itself. This involves an injection process different from the standard wad injection and therefore makes the production of wads more expensive.

Another issue with this product is that, as the material contains a high percentage of PVA, which is a very hygroscopic component, the wad or manufactured product absorbs water very easily. This poses risks to its technical performance, such as the material being too soft under modulus, there being an oxidation reaction with the pellets, vapour generation and increased pressure, all of which adversely impacts the safety during the use of the cartridges, as explained in the document itself.

On the other hand, patent WO9858998 "*Disposable articles for the military or pyrotechnic industries, non-folding roads, driving or walking aids made of biodegradable materials*" generically describes the manufacture of biodegradable products, including those for military and pyrotechnic applications, in which it is guaranteed that these materials have the solidity and stability required for their intended duration of use. To do this, they use mixtures of polymers that combine TPS and polyesters with which they try to achieve biodegradability through the DIN 54900 standard for compostability, but do not indicate that their technical objective is to achieve biodegradability in the soil.

Although it mentions achieving the required solidity and stability, it does not specify how this is accomplished, nor how these properties are related to the percentages of components. Since many of the properties sought in the manufacture of components for hunting and sport shooting cartridges, such as for example high-volume production at low cost, with excellent impact resistance and moisture resistance, are closely tied to a specific ratio of biopolyester to a specific melt flow index, this document cannot anticipate these relationships in a useful manner since it does not provide useful information in this regard.

Likewise, in the case of the manufacture of components for hunting and sport shooting cartridges, achieving biodegradability in the soil is one of the technical objectives to be achieved, and also improved biodegradability in soil compared to the times required by the EN17033 standard. This requires searching for mixtures of components with specific proportions and conducting targeted experimental tests. These should allow for the combination of factors such as high productivity and low production cost, enhanced moisture stability, improved mechanical and ballistic properties. This can only be achieved with a more defined composition and with the specific use of high MVR polyesters. This cannot be deduced and verified in this document.

It is clear that there is a growing social demand and legal requirement for products used in hunting and sport shooting, especially wads, to meet or exceed stringent regulations, such as the EN 17033 standard, in order to reduce the ecological footprint of these activities. To do this, they must be biodegradable in soil, preferably in a shorter time than the one set in the standard. This poses a significant technical problem to be solved when, in addition to improved soil biodegradability, a series of technical requirements must be additionally met to achieve a product that combines, compared to existing solutions, all the desired characteristics, namely:
- High impact resistance, even at sub-zero temperatures
- Fluidity that allows the wads to be injected at a lower temperature, with short injection cycles, increasing production and lowering their cost, all using conventional injection machines.
- Low moisture absorption.
- High dimensional stability and properties such as impact, modulus and strength.
- Compatibility with all types of pellets
- High safety during ballistics, avoiding the accumulation of water vapour inside the weapon and high firing pressures that can affect the ballistics and even damage the weapon.
- Avoid softening of the wad material, with the risk of plugging the outlet of the gases generated during the explosion of the gunpowder, increasing the pressure.
- Safer and more economical material, which does not need special packaging, packing, logistics or special handling processes to prevent it from absorbing moisture.

A product that solves the technical problem of combining all these features in a single solution would provide a clear improvement and advance in the state of the art, not anticipated or deductible from the known documents.

### Description of the invention

In order to solve this problem currently existing in the manufacture of biodegradable components for hunting and sport shooting cartridges, especially for wads, improving the current state of the art, the thermoplastic injection-moldable and soil-biodegradable composition object of the present invention has been devised, which comprises one or more biodegradable polyesters with a fluidity with a MVR greater than or equal to 1 cc/10 min, measured at 190°C/2.16Kg (MVR being Melt Volume Rate), at a percentage greater than or equal to 51% by weight with respect to the total, being able to further comprise plasticized starch at a percentage less than or equal to 49% by weight with respect to the total, and other components, the composition being biodegradable in soil.

The biodegradable polyesters are chosen from the group formed by PBAT (polybutylene adipate terephthalate), PBTSeb (polybutylene perephthalate, with sebacic acid), PHB (polyhydroxybutyrate or polyhydroxybutyric acid), PHA (polyhydroxyalkanoate), polycaprolactone, PLA (polylactic acid), PBS (polybutylene succinate), PBSA (polybutylene succinate adipate) and PBTS (polybutylene terephthalate succinate) being preferably PBAT, PBTSeb or a mixture of both.

Optionally the biodegradable polyesters may also include bio-based monomers.

These biodegradable polyesters have a flowability with an MVR greater than or equal to 1 cc/10 min, measured at 190°C/2.16Kg, preferably with an MVR greater than or equal to 10 cc/10 min, measured at 190°C/2.16 Kg, more preferably with an MVR greater than or equal to 20 cc/10 min, measured at 190°C/2.16 Kg, and most preferably with an MVR greater than or equal to 40 cc/10 min, measured at 190°C/2.16 Kg.

The plasticized starch comprises one or more starches obtained from corn, potato, pea, tapioca, cassava or any other starch-containing biomass. The starch may be native or modified or starch derivatives.

The plasticized starch also comprises one or more plasticizers selected from the group consisting of water, polyhydric alcohols, ethers, thioethers, esters thereof, or a combination thereof, as well as any other compound or polymer capable of transforming the starch into thermoplastic starch. Examples of some of the usable plasticizers are: water, glycerine, sorbitol, urea, polyethylene glycol, ethylene glycol, diethylene glycol, neopentyl glycol, sorbitol monoacetate, sorbitol diacetate, sorbitol monoethoxylate, ethoxylated polyglycerol, sorbitol diethoxylate, 1,2-propanediol, 1,3-propanediol, 1,4-butanediol, polyesters or polyesteretheramides, and mixtures thereof.

It is envisaged that this thermoplastic composition further comprises other components chosen from the group consisting of PVA (polyvinyl alcohol), PPC (polypropylene carbonate), PGA (polyglycolic acid), cellulose, modified cellulose, fibres, colouring matters, impact modifiers, organic and inorganic fillers, thermal stabilizers, hydrolysis stabilizers, UV stabilizers, lubricants, enzymes, biodegradability accelerating additives, other additives and other biodegradable polymers.

All the compositions obtained according to this specification are biodegradable in soil, guaranteeing at least 90% biodegradability after a maximum time of 2 years, meeting and exceeding the specifications of the EN17033 standard at the date of the application, it being preferable that this minimum 90% degradability reaches it in less than one year, and more preferably that it reaches it in less than 200 days. All products are also compostable according to EN13432 and some of them are additionally biodegradable in water such as those containing PHA (polyhydroxyalkanoates), PHB (polyhydroxybutyrate), PVA (polyvinyl acetate), polycaprolactone, starch, cellulose, PGA (polyglycolic acid),..

The preferred application of this injection-moldable and soil-biodegradable thermoplastic composition is in the manufacture of ammunition for hunting and sport shooting, the manufactured ammunition preferably being a part of a shotgun cartridge, and, more preferably, a wad being the part of the shotgun cartridge.

### Advantages of the invention

This injection-moldable and soil-biodegradable thermoplastic composition that is presented provides multiple advantages over the materials currently available for this application, the most important being that the thermoplastic composition is biodegradable in soil, guaranteeing at least 90% biodegradability after a maximum time of 2 years, according to specifications of the EN17033 standard at the date of the application. In fact, the experimental tests carried out show that this minimum 90% degradability is achieved in a significantly shorter time, less than one year, or even less than 200 days. This implies a great advantage over known water-soluble solutions, since the water solubility of a product does not guarantee its biodegradability in water or soil, and compared to solutions of compostable products, which need to be collected.

It should also be noted that some products used in this thermoplastic composition are also additionally biodegradable in fresh and sea water according to ASTM D7081, ISO 14851 and ISO 14852.

Another great advantage of this thermoplastic composition is the high impact resistance of the products formed with it, thanks to its biodegradable polyester content ≥51%, allowing very high pressure resistance at the time of firing.

It is also noteworthy that, thanks to the use of a high percentage of polyesters, the final product made with this composition has a lower moisture absorption compared to other products on the market, which results in greater dimensional stability, greater stability of properties, especially impact, modulus, and resistance, and greater compatibility with all types of pellets, since the presence of moisture in the product can cause chemical reactions and redox between the product and the pellets, especially with those of lead and steel that are the most used in the sector.

Another notable advantage, also due to the lower moisture absorption, is the greater safety during ballistics, since high humidity can cause water vapour accumulation inside the weapon and, therefore, high pressures that can affect the ballistics and even damage the weapon. Cases of these risks have occurred in commercial products, leading to their withdrawal from the market for safety reasons. Preliminary investigations and conclusions showed that pellet cartridges can in some cases cause an increase in pressure in some weapon barrels, which can lead to an expulsion in the barrel right next to the chamber. In the same way, the lower moisture absorption prevents the material of the wad from becoming soft and clogging the outlet of the gases generated during the explosion of the gunpowder, increasing the pressure and causing the risks described above. It also avoids the risks that, at low temperatures, water absorbed by the material can freeze and weaken the wad material, adversely affecting ballistic performance and safety.

These characteristics of high biodegradability in soil, even in water, together with the high resistance to pressure and the lower absorption of moisture, make this composition ideal for the manufacturing processes of ammunition for hunting and sport shooting, especially shotgun cartridges, and more especially the wad of the shotgun cartridge, which is the element responsible for withstanding the high pressure of the shot and protecting the shotgun barrel from erosion caused by pellets during firing, and ensures good ballistic performance and patterning.

Another important advantage is that this thermoplastic composition has a higher fluidity than other known products, thanks to the use of high fluidity polyesters (minimum MVR ≥1 cc/10 min, preferably MVR ≥10 cc/10 min and more preferably MVR ≥20 cc/10 min or even MVR ≥40 cc/10 min), it allows the thermoplastic injection process to be carried out to manufacture the wads, or other parts of the cartridge where appropriate, with a lower temperature, thus reducing the cooling time and consequently the time of the total injection cycle, increasing production and therefore significantly reducing its economic cost.

Another advantage of the present invention is that it has a high impact resistance, even at temperatures up to -30°C, which means significant advantages in ballistics in hunting and sport shooting in geographical regions with low temperatures, especially the United States and northern Europe.

Another added advantage is that, thanks to the greater flexibility of the material by not containing PBS, and having a higher percentage of PBAT or equivalent, a greater recovery of the wad is obtained during its projection, which enhances ballistic performance, particularly in shot pattern or pellet dispersion.

We cannot fail to mention that experimental tests have shown that the wads, and other parts of the cartridge, manufactured with this thermoplastic composition allow obtaining lower pressures inside the weapon than with the wads of the examples of patent WO2024013775 that contain 50-70% PBS and 30-50% PBAT, under the same cartridge conditions, reaching similar output speeds. This results in a longer life and reliability of the gun chamber, and a lower risk of accidents.

It is also important to note that this thermoplastic composition allows us to obtain products that meet and exceed the specifications of the EN17033 standard at the date of the application, which is much more demanding than the EN17556 standard with which some products on the market are certified as biodegradable in soil. The EN17556 standard only covers biodegradability tests (% conversion of organic carbon to CO₂), while the EN17033 standard requires much more demanding additional tests such as analysis of heavy metals and hazardous substances and ecotoxicity in plants, invertebrates and micro-organisms.

### Description of the figures

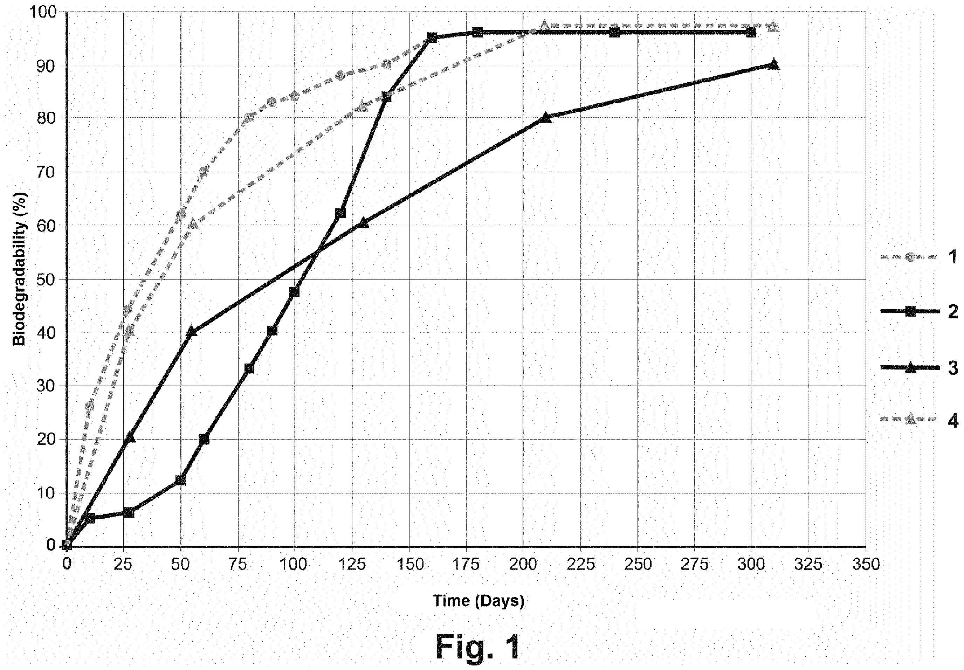

Figure 1 shows a graph of biodegradability in soil, according to the ISO17556 standard, of thermoplastic compositions according to the invention, one containing starch (TPS) and a percentage ≥ 51% of biodegradable polyester, and another containing a percentage ≥ 51% of biodegradable polyester, without starch (TPS), both compared to the biodegradability of cellulose as a reference in each case.

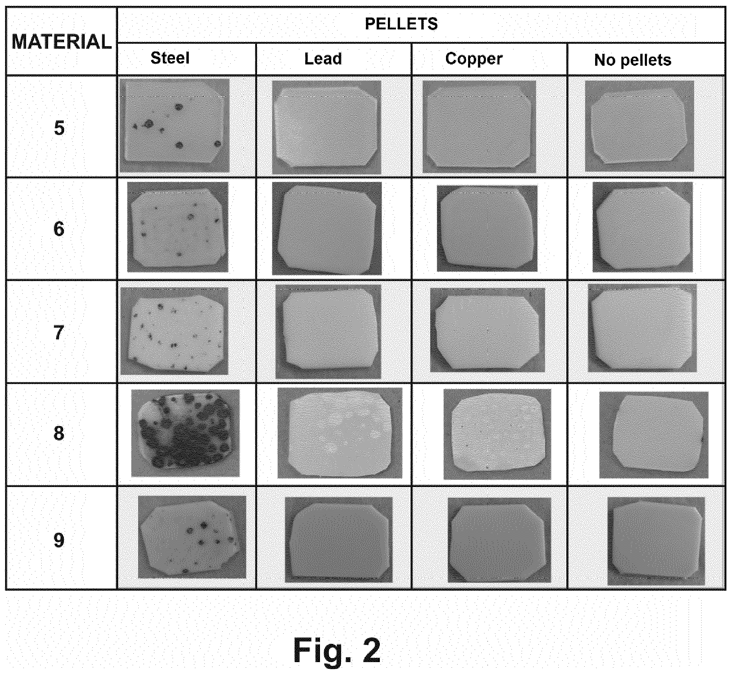

Figure 2 shows photos of different materials after being in contact with steel shot for 7 days at 90% relative humidity and 50°C temperature, to illustrate the chemical and redox reactions between the plastic material used and the pellets.

### Preferred embodiment of the invention

The injection-moldable and soil-biodegradable thermoplastic composition is suitable for use in ammunition, military and pyrotechnic applications and comprises one or more biodegradable polyesters with a flowability with an MVR greater than or equal to 1 cc/10 min, measured at 190°C/2.16 Kg, (MVR being Melt Volume Rate), in a proportion greater than or equal to 51% by weight with respect to the total, and may further comprise plasticized starch in a proportion less than or equal to 49% by weight with respect to the total, and other components, the composition being biodegradable in soil.

The biodegradable polyesters are chosen from the group formed by PBAT (polybutylene adipate terephthalate), PBTSeb (polybutylene perephthalate, with sebacic acid), PHB (polyhydroxybutyrate or polyhydroxybutyric acid), PHA (polyhydroxyalkanoate), polycaprolactone, PLA (polylactic acid), PBS (polybutylene succinate), PBSA (polybutylene succinate adipate) and PBTS (polybutylene terephthalate succinate) preferably being PBAT, PBTSeb or a mixture of both.

Optionally the biodegradable polyesters may also include bio-based monomers.

These biodegradable polyesters have a flowability with an MVR greater than or equal to 1 cc/10 min, measured at 190°C/2.16Kg, preferably with an MVR greater than or equal to 10 cc/10 min, measured at 190°C/2.16 Kg, more preferably with an MVR greater than or equal to 20 cc/10 min, measured at 190°C/2.16 Kg, and most preferably with an MVR greater than or equal to 40 cc/10 min, measured at 190°C/2.16 Kg.

The plasticized starch comprises one or more starches obtained from corn, potato, pea, tapioca, cassava or any other starch-containing biomass. The starch may be native or modified or starch derivatives.

The plasticized starch also comprises one or more plasticizers selected from the group consisting of water, polyhydric alcohols, ethers, thioethers, esters thereof, or a combination thereof, as well as any other compound or polymer capable of transforming the starch into thermoplastic starch. Examples of some of the usable plasticizers are: water, glycerine, sorbitol, urea, polyethylene glycol, ethylene glycol, diethylene glycol, neopentyl glycol, sorbitol monoacetate, sorbitol diacetate, sorbitol monoethoxylate, ethoxylated polyglycerol, sorbitol diethoxylate, 1,2-propanediol, 1,3-propanediol, 1,4-butanediol, polyesters or polyesteretheramides, and mixtures thereof.

It is envisaged that this thermoplastic composition further comprises optionally other components chosen from the group consisting of PVA (polyvinyl acetate), PPC (polypropylene carbonate), PGA (polyglycolic acid), cellulose, modified cellulose, fibres, colouring matters, impact modifiers, organic and inorganic fillers, thermal stabilizers, hydrolysis stabilizers, UV stabilizers, lubricants, enzymes, biodegradability accelerating additives, other additives and other biodegradable polymers.

All the compositions obtained according to this specification are biodegradable in soil, guaranteeing at least 90% biodegradability after a maximum time of 2 years, meeting and exceeding the specifications of the EN17033 standard at the date of the application, it being preferable that this minimum 90% degradability reaches it in less than one year, and more preferably that it reaches it in less than 200 days. Some products are also additionally biodegradable in water such as those containing PHA (polyhydroxyalkanoates), PHB (polyhydroxybutyrate), PVA (polyvinyl acetate), polycaprolactone, starch, cellulose, PGA (polyglycolic acid),..

The preferred application of this injection-moldable and soil-biodegradable thermoplastic composition is in the manufacture of ammunition for hunting and sport shooting, the manufactured ammunition preferably being a part of a shotgun cartridge, and, more preferably, a wad being the part of the shotgun cartridge.

### Examples of experimental tests and their results

This composition has been subjected to intense experimental tests to determine its components, their percentages and their effect on the solution of the technical problem posed, of which we show some of the results by way of example.

### Example 1 - Biodegradability in soil according to EN17033

One of the main criteria of the EN 17033 standard is the requirement of ≥90% biodegradation under aerobic conditions for plastic, i.e. conversion of organic carbon to CO₂, in a natural soil under conditions of 20 to 28°C within 2 years using a standard test to measure CO₂ respiration.

Figure 1 shows an example of a graph of biodegradability in soil, made according to the EN17033 standard, of thermoplastic compositions according to the invention, one containing TPS starch and a percentage ≥ 51% of biodegradable polyester (2), compared to the biodegradability of cellulose (1) as a reference and another containing a percentage ≥ 51% of biodegradable polyester without TPS starch (3), also compared to the biodegradability of cellulose (4) as a reference

The EN17033 standard, at present, requires that after 2 years of testing at least 90% biodegradability is achieved. The graph of Figure 1 shows how the thermoplastic composition according to the invention containing TPS starch and a percentage ≥51% of biodegradable polyester (2) achieves the same biodegradability of cellulose (1), greater than 90%, in a time between 150 and 200 days. We also verified how the thermoplastic composition according to the invention, containing a percentage ≥51% of biodegradable polyester without starch TPS (3), achieves the same biodegradability of cellulose (4), greater than 90%, in a time of about 360 days. In both cases, the biodegradability requirements of this standard are far exceeded.

The EN 17033 standard also requires that materials be subjected to laboratory tests to determine, among others,
- their chemical composition (in particular for regulated metals and hazardous substances),
- their biodegradation in soil, and
- their ecotoxicity (i.e. their toxic effects on plants, invertebrates and micro-organisms).

The thermoplastic composition according to the invention has also largely passed all these tests.

### Example 2 - Impact resistance

The thermoplastic composition according to the invention achieves impact resistance superior to biodegradable compositions for hunting cartridges, and for wads, known in the state of the art. Impact resistance is very important for correct ballistic performance since the wad must withstand very high pressure at the moment of firing. This greater impact resistance is achieved mainly thanks to containing biodegradable polyesters in a high percentage ≥ 51%, and also thanks to a lower, or even zero, content of starch or plasticized starch, ≤ 49%. Table 1 shows the impact resistance decreases by incorporating a higher percentage of starch, as is common practice in the state of the art:

**Table 1 - Impact**

| **Material** | **Impact 23°C** (KJ/m2, ISO 179/1eA) | **Impact -10°C** (KJ/m2, ISO 179/1eA) |
|---|---|---|
| 81% PBAT + 6% PLA + 13% inorganic filler | 57 | 74 |
| 72% PBAT + 3% PLA + 25% TPS (starch+plasticizer) | 55 | 18 |
| 58% PBAT + 3% PLA + 39% TPS (starch+plasticizer) | 50 | 7.7 |
| 50% PBAT + 50% TPS (starch+plasticizer) | 4 | 2 |

The fact that PBS has a lower impact resistance at 23°C and in the cold than PBAT also influences impact resistance. Therefore, the thermoplastic composition according to the invention with ≥51% PBAT has greater impact resistance than prior art compositions containing a maximum of 50% PBAT, especially at -10°C. This offers important advantages in ballistic performance for hunting and sport shooting in geographical regions with low temperatures (such as the United States or northern Europe).

Table 2 shows with examples:

**Table 2 - Impact resistance**

| **Material after injection** | **Humidity** (ISO 15512) | **Bending modulus** (MPa, ISO 178) | **Bending strength** (Mpa, ISO 178) | **Impact on 23°C** (KJ/m2, ISO 179/1eA) | **Impact on -10°C** (KJ/m2, ISO 179/1eA) |
|---|---|---|---|---|---|
| 70% PBS + 30% PBAT | 0.2 | 416 | 23 | 15 | 9 |
| 60% PBS + 40% PBAT | 0.2 | 363 | 19 | 56 | 14 |
| 49% PBS + 51% PBAT | 0.2 | 283 | 16 | 64 | 20 |
| 40% PBS + 60% PBAT | 0.1 | 260 | 14 | 65 | 30 |

### Example 3 - Fluency

The thermoplastic composition according to the invention achieves greater fluidity with respect to the biodegradable compositions for hunting cartridges, and for wads, known in the state of the art. This greater fluidity is achieved thanks to the use of high fluidity polyesters (MVR ≥1, preferably MVR ≥10 and more preferably MVR ≥20 and more preferably MVR ≥40), which allows injecting the wads, or the components of the cartridge to be manufactured, at a lower temperature, thus reducing the cooling time and consequently the injection cycle time, thus increasing production and lowering cost.

Table 3 shows some examples of how the fluidity decreases, and, therefore, the viscosity increases, when starch is incorporated, and how a biopolyester (in the case of the examples it is PBAT) of high MVR (high fluidity, low viscosity) manages to increase the fluidity of the final product:

**Table 3 - Fluency**

| **Material** | **MVR** (190°C/2.16Kg, cc/10min, ISO 1133) |
|---|---|
| 81% PBAT (MVR: 20) + 6% PLA + 13% inorganic filler | 10 |
| 81% PBAT (MVR: 3-5) + 6% PLA + 13% inorganic filler | 4 |
| 72% PBAT (MVR:3-5) + 3% PLA + 25% TPS | 2.6 |
| 72% PBAT (MVR:20) + 3% PLA + 25% TPS | 8 |
| 57% PBAT (MVR:3-5) + 3% PLA + 40% TPS | 1.8 |
| 57% PBAT (MVR:20) + 3% PLA + 40% TPS | 4.5 |

Table 4 shows how replacing an MVR PBAT: 3-5 by other of MVR:20 increases the fluidity of the final product:

**Table 4 - Fluency**

| **Material** | **MVR** (190°C/2.16Kg, cc/10min, ISO 1133) |
|---|---|
| 81% PBAT (MVR: 20) + 6% PLA + 13% inorganic filler | 10 |
| 81% PBAT (MVR: 3-5) + 6% PLA + 13% inorganic filler | 4 |
| 30% PBAT (MVR: 3-5) + 70% PBS (MVR:20) | 34 |
| 30% PBAT (MVR: 20) + 70% PBS (MVR:20) | 45 |

And Table 5 shows the increased fluidity of compositions with biodegradable polyester type PBTSeb with an MVR of 20 cc/10 min measured at 190°C/2.19 Kg and how the greater fluidity of the composition does not influence the mechanical properties:

**Table 5 - Fluidity and mechanical properties**

| **Material in test tube** | **MVR** (190°C/2.1 6 Kg, cc/10min, ISO 1133) | **Humidity** (ISO 15512) | **Impact** (KJ/m2, ISO 179/1eA) | | | **Bending *(ISO 178)*** | |
|---|---|---|---|---|---|---|---|
| | | | **23°C** | **-10°C** | **-30°C** | **Bending modulus** (MPa) | **Bending strength** (MPa) |
| 25% TPS + 2% PLA +73% PBTSeb (MVR:3-5) | 3 | 0.2 | 36 | 23 | 5.5 | 110 | 6.7 |
| 25% TPS + 2% PLA +73% PBTSeb (MVR:20) | 12 | 0.25 | 36 | 20 | 4.8 | 125 | 6.6 |
| 39% TPS + 2% PLA +59% PBTSeb (MVR:3-5) | 2 | 0.3 | 42 | 6 | 2.2 | 185 | 8.4 |
| 39% TPS + 2% PLA +59% PBTSeb (MVR:20) | 4.5 | 0.38 | 31 | 4 | 1.9 | 180 | 8.2 |
| 81% PBTSeb (MVR:3-5) + 6% PLA + 13% inorganic filler | 4 | 0.07 | 41 | 70 | 17.1 | 185 | 9 |
| 81% PBTSeb (MVR:20) + 6% PLA + 13% inorganic filler | 8 | 0.07 | 48 | 77 | 14.6 | 220 | 9.5 |

### Example 4 - Moisture absorption

The thermoplastic composition according to the invention also achieves lower moisture absorption with respect to the biodegradable compositions for hunting cartridges, and for wads, known in the state of the art, thanks to the incorporation of polyesters at a concentration ≥ 51%. Table 6 shows this lower moisture absorption achieved:

**Table 6 - Moisture absorption**

| **Material** | **% humidity after conditioning at 60%RH / 23°C.** (ISO 15512) | | | | | |
|---|---|---|---|---|---|---|
| | **Initial** | **5 days** | **9 days** | **19 days** | **26 days** | **33 days** |
| 72%PBAT+3%PLA+25% TPS | 0.36 | 1.14 | 1.86 | 2.54 | 2.24 | 2.4 |
| 81%PBAT+6%PLA+13% inorganic filler | 0.06 | 0.36 | 0.32 | 0.33 | 0.34 | 0.36 |

It is observed how the product without starch absorbs much less moisture than the product with starch. And it is also observed that in the product with starch, containing >50% PBAT, there is a stabilization of the absorbed moisture around 2.2-2.5%, values that do not cause risks in the ballistic performance of the cartridge.

As we have already mentioned, lower moisture absorption entails additional advantages of greater dimensional stability, greater stability of properties such as impact, modulus and resistance, and greater compatibility with all types of pellets, since the presence of moisture in the material can cause chemical reactions and redox between the material and the pellets, especially with those of lead and steel that are the most commonly used in the current state of the art.

Tables 7 and 8 show the moisture absorption comparison of a thermoplastic composition according to the invention and of a conventional PVA-based material. The lower moisture absorption in the thermoplastic composition according to the invention and its higher impact resistance are observed. For the material containing 75% PVA, the modulus and resistance drop when it absorbs 10% moisture to values that can cause ballistic performance issues, while the thermoplastic composition according to the invention maintains its values:

**Table 7- Moisture absorption after injection**

| **Material** | **MVR** (190°C/2.16 Kg, ISO 1133) | **Humidity** (ISO 15512) | **Bending modulus** *(Mpa, ISO 178)* | **Bending strength** (MPa, ISO 178) | **Impact 23°C** (KJ/m2, ISO 179/1eA) | **Impact -10°C** (KJ/m2, ISO 179/1eA) |
|---|---|---|---|---|---|---|
| 75% PVA + 20% plasticizer + Additives | 1.5 | <1 | 100 | 8 | 10 | 4 |
| 81% PBAT + 6% PLA + 13% Inorganic filler | 10 | 0.2 | 230 | 9 | 57 | 74 |

**Table 8 - Moisture absorption after 10 days at 60% RH / 23°C**

| **Material** | **Humidity** (ISO 15512) | **Bending modulus** (MPa, ISO 178) | **Bending strength** (MPa, ISO 178) | **Impact 23°C** (KJ/m2, ISO 179/1eA) | **Impact -10°C** (KJ/m2, ISO 179/1eA) |
|---|---|---|---|---|---|
| 75% PVA + 20% plasticizer + Additives | 10 | 65 | 3 | 34 | 50 |
| 81% PBAT + 6% PLA + 13% Inorganic filler | 0.8 | 220 | 8.5 | 50 | 70 |

### Example 5 - Dimensional stability tests

Table 9 shows data on the dimensions of wads freshly injected according to the thermoplastic composition of the invention and after conditioning at 23°C / 60%RH, compared to conventional PE wads It is observed that wads manufactured with the thermoplastic composition according to the invention absorb less moisture and change their dimensions less after conditioning:

**Table 9 - Dimensional stability**

| **Material after injection** | **Freshly injected** | | | **After conditioning at 23°C / 60%RH** | | | **Change in dimensions after conditioning** | |
|---|---|---|---|---|---|---|---|---|
| | **Relative humidity (%)** (ISO 15512) | **Height (mm)** | **Diameter (mm)** | **Relative humidity (%)** (ISO 15512) | **Height (mm)** | **Diameter (mm)** | **Δ Height (%)** | **Δ Diameter (%)** |
| 75% PVA + 25% Plasticizer | 0.50 | 42.05 | 18.35 | 6.10 | 42.30 | 18.55 | 0.59 | 1.09 |
| 30% PVA + 8% Plasticizer + 62% PBAT | 0.40 | 41.90 | 18.35 | 3.40 | 42.00 | 18.40 | 0.24 | 0.27 |
| 72% PBAT + 3% PLA + 25% TPS | < 1.0 | 41.90 | 18.30 | <2 | 41.95 | 18.35 | 0.12 | 0.27 |
| 81% PBAT + 6% PLA + 13% inorganic filler | < 1.0 | 41.90 | 18.30 | < 1.0 | 41.95 | 18.35 | 0.12 | 0.27 |
| PE | 0.01 | 40.80 | 18.05 | 0.01 | 40.80 | 18.05 | 0 | 0 |

### Example 6 - Chemical reactions and redox between the material and the pellets

We have seen that the presence of moisture in the material can cause chemical reactions and redox between the material used and the pellets. Thus, Figure 3 shows photos of different materials after being in contact with steel, lead and copper pellets for 7 days at 90% relative humidity and 50°C temperature. These materials are:
- polyethylene (5), which is the standard material on the market for non-biodegradable hunting cartridges,
- a material with high moisture absorption due to PVA with a composition of 75% PVA + 25% Plasticiser (8),
- a thermoplastic composition according to the invention containing 81% PBAT + 6% PLA + 13% inorganic filler (6),
- a thermoplastic composition according to the invention containing 30% PVA + 8% Plasticizer + 62% PBAT (7) and
- a thermoplastic composition according to the invention containing 72% PBAT + 3% PLA + 25% TPS (9)

These photos show that:
- There is no reaction with the polyethylene composition pellets (5) or the thermoplastic composition according to the invention containing 81% PBAT + 6% PLA + 13% inorganic filler (6).
- There is very little reaction with the thermoplastic composition according to the invention containing 72% PBAT + 3% PLA + 25% TPS (9) , since, despite containing TPS, which is highly hygroscopic, and >50% PBAT, there is hardly any reaction with the pellets. There is also very little reaction with the thermoplastic composition according to the invention containing 30% PVA + 8% Plasticizer + 62% PBAT (7), since, although it contains PVA which is highly hygroscopic when carrying >50% PBAT, there is hardly any reaction with the pellets.
- There is significant interaction with the material containing 75% PVA + 25% Plasticizer (8), due to the high percentage of PVA that is highly hygroscopic.

### Example 7 - Ballistic performance: firing pressure

The thermoplastic composition according to the invention achieves cartridges that produce lower pressures in the weapon at the time of firing, lower than those achieved with biodegradable compositions for hunting cartridges, and for wads, known in the state of the art and with conventional cartridges.

Table 10 compares wads using known technologies from the prior art, such as PE, with wads made of material according to the thermoplastic composition of the invention, under the same conditions: 12 gauge, 1.8 g of Powder A0 and 32 g of steel shot. The pressures generated are lower with the wads according to the thermoplastic composition of the invention, thus achieving greater safety, and the speeds achieved are similar to each other and to the standard for polyethylene wads.

In Table 10 the first value corresponds to material with a composition according to the invention, and the second to a composition known in the state of the art:

**Table 10 - Comparative pressure in the weapon**

| **Material** | **Bending modulus** (MPa, ISO 178) | **Ballistics** (32 g pellets, 1.8 g gunpowder) | |
|---|---|---|---|
| | | **Maximum pressure** (bar, must be <1030 bar) | **Speed V1** (m/s, must be >=400 m/s) |
| 72% PBAT + 3% PLA + 25% TPS | 176 | 841 | 400 |
| 42.86% TPS + 34.28% PBAT + 22.86% PBS | | 1157 | 425 |

Table 11 shows the ballistic performance results obtained with wads according to the thermoplastic composition of the invention 72%PBAT (MVR:3-5) + 3%PLA + 25% TPS, with two different cartridge types:

**Table 11 - Shooting tests**

| **Cartridge** | **Pressure (bar)** | | | **Speed (m/s)** | | **Powder** | |
|---|---|---|---|---|---|---|---|
| | **P mean** | **P max** | **P max*** | **V1** | **V1*** | **Weight (g)** | **Type** |
| CAL12-P28 | 548 | 554 | < 1030 | 398 | >= 395 | 1.8 | A0 |
| CAL12-A32 | 818 | 841 | < 1030 | 403 | >= 400 | 1.8 | A0 |

*Where:*
*V1* (m*/*s)* - *Typical speed with conventional PE wads*
*P max (bar): Maximum allowable pressure*

This Table 11 shows how the pressures achieved with wads using the thermoplastic composition of the invention are lower than the maximum allowed (< 1030 bar), and the speeds are similar to those obtained with polyethylene wads: ≥395 m/s or ≥400 m/s depending on whether the pellets are made of lead or steel.

Persons skilled in the art will easily understand that the characteristics of different embodiments can be combined with characteristics of other possible embodiments whenever such a combination is technically possible.

All the information referring to examples or modes of embodiment, form part of the description of the invention.

## Claims

1. - Injection-moldable and soil-biodegradable thermoplastic composition, suitable for use in ammunition, **characterized in that** it comprises one or more biodegradable polyesters with a melt flow rate MVR greater than or equal to 1 cc/10 min measured at 190°C/2.16 Kg, MVR being the melt flow rate, in a percentage greater than or equal to 51% by weight with respect to the total, the composition being biodegradable in soil.

2. - Injection-moldable and soil-biodegradable thermoplastic composition, according to the preceding claim, **characterized in that** the biodegradable polyesters are chosen from the group formed by PBAT, PBTSeb, PHB, PHA, Polycaprolactone, PLA, PBS, PBSA, PBTS.

3. - Injection-moldable and soil-biodegradable thermoplastic composition, according to any of the preceding claims, **characterized in that** the biodegradable polyesters contain biobased monomers.

4. - Injection-moldable and soil-biodegradable thermoplastic composition, according to any of the preceding claims, **characterized in that** the biodegradable polyesters have an MVR greater than or equal to 10 cc/10 min, measured at 190°C/2.16 Kg.

5. - Injection-moldable and soil-biodegradable thermoplastic composition, according to any of the preceding claims, **characterized in that** the biodegradable polyesters have an MVR greater than or equal to 20 cc/10 min, measured at 190°C/2.16 Kg.

6. - Injection-moldable and soil-biodegradable thermoplastic composition, according to any of the preceding claims, **characterized in that it** comprises plasticized starch at a percentage less than or equal to 49% by weight with respect to the total.

7. - An injection-moldable and soil-biodegradable thermoplastic composition according to claim 6, **characterized in that** the plasticized starch comprises one or more starches originating from the group consisting of corn, potato, pea, tapioca, cassava and starch-containing biomasses.

8. - Injection-moldable and soil-biodegradable thermoplastic composition, according to claim 7, **characterized in that** the starch or starches are chosen from the group formed by native starches, modified starches and starch derivatives.

9. - Injection-moldable and soil-biodegradable thermoplastic composition, according to any of the preceding claims 6 to 8, **characterized in that** the plasticized starch comprises one or more plasticizers chosen from the group formed by water, polyhydric alcohols, ethers, thioethers, the esters thereof, or a combination thereof, and any other compound or polymer capable of transforming the starch into thermoplastic starch.

10. - Injection-moldable and soil-biodegradable thermoplastic composition, according to any of the preceding claims, **characterized in that it** comprises other components chosen from the group formed by PVA (polyvinyl alcohol), PPC (polypropylene carbonate), PGA (polyglycolic acid), cellulose, modified cellulose, fibres, dyes, impact modifiers, organic and inorganic fillers, thermal stabilizers, hydrolysis stabilizers, UV stabilizers, lubricants, enzymes, biodegradability accelerating additives, other additives and other biodegradable polymers.

11. - Ammunition for hunting and sport shooting **characterized by** comprising one or more injection-molded elements with a composition as described in the preceding claims.

12. - Ammunition for hunting and sport shooting, according to claim 11, **characterized in that** the injection-molded elements are parts of a shotgun cartridge.

13. - Ammunition for hunting and sport shooting, according to claim 12, **characterized by** the wad being a component of the shotgun shell.
